# EUROPÄISCHE PATENTSCHRIFT

(11) **EP 0 617 647 B1**
(45) Veröffentlichungstag und Bekanntmachung des Hinweises auf die Patenterteilung: **17.04.1996**
(21) Anmeldenummer: 92924562.9
(22) Anmeldetag: 07.12.1992
(51) Int. Cl.: B23B 27/16, B23B 27/22, B23C 5/20

(54) **SCHNEIDEINSATZ MIT ENTLANG DER SCHNEIDKANTE SICH ERSTRECKENDEN TRAPEZFÖRMIGEN EINDRÜCKUNGEN**
CUTTING INSERT
PLAQUETTE D'USINAGE AVEC EMPREINTES TRAPEZOIDALES S'ETENDANT LE LONG DE L'ARETE DE COUPE

(30) Priorität: 14.12.1991 DE 4141368
(43) Veröffentlichungstag der Anmeldung: 05.10.1994
(73) Patentinhaber: Widia GmbH, D-45145 Essen (DE)
(72) Erfinder: AGUSTIN PAYA, José, D-4330 Mülheim (DE)
(74) Vertreter: Vomberg, Friedhelm, Dipl.-Phys.
(86) Internationale Anmeldenummer: DE9201027
(87) Internationale Veröffentlichungsnummer: WO9311898

(56) Entgegenhaltungen:
- EP-A- 0 414 241
- EP-A- 0 480 576
- WO-A-89/02328
- DE-A- 3 731 426
- GB-B- 1 378 342
- Patent Abstracts of Japan, volume 13, No. 237, M-833, abstract of JP, A, 1-51206 (SEIKO EPSON CORP), 27 February 1989 (27.02.89)

## Beschreibung

Die Erfindung betrifft einen Schneideinsatz für die spanabhebende Bearbeitung, insbesondere zur Grobbearbeitung metallischer Werkstücke bei hohen Vorschüben, mit einer Spanfläche, die mindestens im Bereich einer Schneidkante mit Eindrückungen versehen ist, die in fortlaufender Reihe entlang der Schneidkante und diese durchbrechend angeordnet sind und die den Span quer zur Ablaufrichtung verformen und die in einem parallel zur Schneidkante und senkrecht zur Spanfläche liegenden Querschnitt im wesentlichen eine Trapezform mit zur Spanfläche hin geöffneten Trapezflanken aufweisen.

Schneideinsätze dieser Art sind nach dem Stand der Technik z.B. aus der EP 0 414 241 A2 bekannt. Dieser Schneideinsatz besitzt Einkerbungen sowohl an der Freifläche als auch an der Spanfläche, die im Bereich der Schneidkante jeweils ineinander übergehen, wodurch die Schneidkante im Bereich der Einkerbungen gegenüber den übrigen Schneidkantenbereichen zurücktritt. Die jeweilige Trapezform ist scharfkantig ausgeführt, weshalb die Zielsetzung hoher Standzeiten nur bedingt erreicht werden kann. Darüber hinaus ist nach wie vor die beim Spanablauf auf der Spanfläche auftretende Reibung zu hoch. Nachteiligerweise kann der in der genannten Druckschrift dargestellte Schneideinsatz auch nur für einen bestimmten Fertigungseinsatz verwendet werden.

Weitere Schneideinsätze mit Eindrückungen sind aus der DE 28 40 610 A1 bekannt. Durch eine ausreichende Breite der Eindrückungen an der tatsächlichen Schneidkante soll eine erhöhte plastische Verformung oder Versteifung des ablaufenden Spanes erreicht werden. In einer Draufsicht sind die Eindrückungen im wesentlichen rund bis rechteckig mit abgerundeten Übergangs- und Kantenbereichen in die Spanfläche. Eine vergleichbare Schneidplatte beschreibt die US-A-4 447 175, bei der entlang der Schneidkante jeweilige Reihen von konkaven Ausnehmungen vorgesehen sind, die jedoch die Schneidkante nicht durchbrechen. Die Ausnehmungen sind in einer Draufsicht gesehen im wesentlichen rechteckig.

Ebenfalls in der Draufsicht rechteckig oder auch dreieckförmig sind die in der US-A-3 973 308 beschriebenen Ausnehmungen, die aber ebenfalls nicht bis zur Schneidkante reichen, sondern lediglich im Bereich einer sich an die Schneidkante angrenzenden Fase beginnen und sich in den abfallenden Teil einer Spanmulde hin erstrecken. Auch diese Ausführungsform soll der Reduzierung der sich durch die Metallbearbeitung ergebenden Temperatur und Kräfte an der Spanfläche dienen.

Gleichfalls zur Erniedrigung der beim Bearbeitungsvorgang entstehenden thermischen und mechanischen Belastung wird in der DE 37 31 426 A1 ein Schneideinsatz mit wellenförmiger Schneidkante vorgeschlagen, bei dem die Spanfläche sowohl in Richtung der Schneidkante als auch senkrecht dazu geradlinig bis wellenförmig ist.

Es ist Aufgabe der vorliegenden Erfindung, einen Schneideinsatz der eingangs genannten Art zu entwickeln, der auch bei hohen Vorschüben eine stabile Spanführung und -umlenkung bei geringstmöglichem Verschleiß der Schneidkante zuläßt. Weiterhin soll der Schneideinsatz konstruktiv einfach, auch im Hinblick auf die Herstellung, aufgebaut sein.

Zur Lösung wird der im Anspruch 1 beschriebene Schneideinsatz vorgeschlagen. Dieser besitzt Eindrückungen mit einem zur Schneidkante hin auslaufenden Spanflächengrund, der einen negativen Spanwinkel oder einen Spanwinkel von 0° für den Fall einer außerhalb der Eindrückung mit einem positiven Spanwinkel ausgebildeten Spanfläche aufweist. Die Spanfläche im Bereich zwischen den Eindrückungen an den Schneidkanten besitzt einen positiven Spanwinkel von mindestens 5°. Zur Vermeidung von scharfkantigen Übergängen zwischen den Eindrückungen und der sie umgebenden Spanfläche im Bereich der Schneidkanten sind die Übergänge abgerundet, wozu sich vorzugsweise ein Radius zwischen 0,3 bis 3 mm anbietet.

Dieser Schneideinsatz führt beim ablaufenden Span zu einer plastischen Verformung mit geringstmöglicher Kraft und Reibung bei der Spanabfuhr. Sowohl die Spanformung als auch die Spanführung werden durch den negativen Spanwinkel der Eindrückungen positiv beeinflußt. Insgesamt wird durch die negativen Spanwinkel der Eindrückungen als Unterbrechung der Schneidkante die Schneidkante auch derart stabilisiert, daß große Vorschübe ohne die Gefahr des Ausbrechens von Schneidkantenteilen realisiert werden können. Die Querschnitts-Trapezform ist auch bei der Schneideinsatzherstellung nicht nur klar definierbar, sondern auch ohne großen Aufwand zu verwirklichen, was sich kostengünstig auswirkt. Zudem sind je nach Schneideinsatzgebiet konstruktive Variationen insofern möglich, wie die Trapezflankenwinkel sowie die negativen Spanwinkel und damit die Tiefe der Eindrückungen dem Bedarfsfall, d.h. den Schnittgeschwindigkeiten, Schnittiefen, Vorschübe und dem zu bearbeitenden Werkstück, angepaßt werden können. Die Spanformung und die Spanlenkung setzt auch - im Gegensatz zu häufig nach dem Stand der Technik bekannten Ausführungsformen mit nutenförmigen Ausnehmungen in der Spanfläche oder sonstigen erhabenen Spanbrechern - unmittelbar an der Schneidkante ein, wobei die Art der Verformung durch die Tiefe und Breite der Eindrückungen gegenüber der sie umgebenden Spanfläche bestimmt wird.

Durch den positiven Spanwinkel läßt sich insbesondere die Schneidleistung bzw. Vorschubgeschwindigkeit deutlich erhöhen.

Vorzugsweise ist die Trapezform der Eindrückungen zu einer Schneidkantennormalen achsensymmetrisch, d.h., es liegen an beiden Trapezflanken gleiche Neigungswinkel zu der Spanfläche bzw. zu dem Spanflächengrund der Eindrückung vor. Durch diese Maßnahme werden einseitige bzw. punktuelle Überbelastungen der Schneidkante vermieden.

Nach einer Weiterbildung der Erfindung besitzt die Schneidecken-nächste Eindrückung jeweils eine Trapezflanke, die zur die Eindrückung umgebenden Spanfläche einen steileren Neigungswinkel und/oder schmalere Trapezgrundflächen und/oder kleinere Abstände der Eindrückungen voneinander aufweisen. Insbesondere im Schneideckenbereich kann daher von einer gleichmäßigen Ausbildung der Eindrückungen mit dem Ziel abgewichen werden, den durch den Spanquerschnitt stark beanspruchten Eckenbereich so auszubilden, daß dort eine intensivere Formung des ablaufenden Spanes gegeben ist, um dem Span die notwendige Steifigkeit für den gewollten Spanbruch zu geben.

Vorzugsweise liegt der an der negativen Spanfläche gemessene Trapezflankenwinkel zwischen 30° und 80°. Der negative Spanwinkel des trapezförmigen Grundes der Eindrückung liegt zwischen 0° und 20°, vorzugsweise zwischen 5° und 15°. Der positive Spanwinkel der die Eindrückungen umgebenden Spanfläche liegt zwischen 0° und 25°, vorzugsweise zwischen 5° und 20°. Es hat sich ferner als günstig erwiesen, an der Schneidkante die Abstände der Eindrückungen voneinander kleiner zu wählen als die Breite der Eindrückungen. Alternativ hierzu können die Abstände der Eindrückungen mit wachsendem Abstand von der Schneidecke gleichmäßig zunehmen.

Die Ausbildung der Eindrückungen in einer Draufsicht gesehen ist prinzipiell freigestellt, jedoch führt eine Verjüngung der Eindrückung zur Spanflächenmitte hin, etwa in Form einer dreieckigen oder trapezförmigen Ausbildung dazu, daß die angrenzenden, mit positiven Spanwinkeln ausgestatteten Bereiche, zur Schneidkante hin, ebenfalls verjüngt sind und dadurch wie ein Keil in das zu zerspanende Material eindringen. Fertigungstechnische Vorteile sind ebenfalls vorhanden. Daher wird vorzugsweise die Geometrie der Eindrückungen, in einer Draufsicht auf die Spanfläche gesehen, im wesentlichen trapezförmig gewählt. Die Breite der Eindrückungen beträgt nach einer weiteren Ausgestaltung der Erfindung an der Schneidkante 0,5 bis 4 mm, so daß mindestens drei oder vier Eindrückungen pro Schneidkante verwirklicht werden. Das Verhältnis der Breite zu der Tiefe der Eindrückung beträgt 6 zu 1, vorzugsweise je nach Anforderungsprofil 3 zu 1 oder 4 zu 1.

Nach einer weiteren Ausbildung der Erfindung grenzt an die Schneidkante eine Fase an, deren Winkel zu dem positiven Spanflächenbereich zwischen den Eindrückungen derselbe sein soll, wie der Winkel zwischen der betreffenden Fase und dem negativen Spanflächengrund der Eindrückung. Mit anderen Worten, die Fase folgt dem geometrischen Verlauf der Flächen, die sich hinter der Fase befinden. Hierdurch tritt im Anschlußbereich an die Fase eine Entlastung des Spanes ein, der ein übermäßiges Stauchen bzw. vorzeitiges Brechen verhindert. Der genannte Winkel liegt nach einer weiteren Ausgestaltung der Erfindung zwischen 160° und 175°. Zur weiteren Entlastung des Spanes kann der Spanflächengrund und/oder die diesen umgebende Spanfläche eine zusätzliche Spanmulde aufweisen.

Eine zusätzliche Spanformung kann auch durch erhabene Spanformelemente, vorzugsweise in teilkegeliger oder pyramidenstumpfartiger Form erreicht werden, wenn die die Eindrückung umgebende Spanfläche im Abstand von der Schneidkante mit solchen Spanformelementen ausgestattet wird.

Weiterhin kann die Spanfläche entlang der Schneidkante von Schneidecke zu Schneidecke eine konvexe oder konkave Hüllkurve besitzen, wobei die Tiefe und/oder die Abstände der Eindrückungen von der Schneidecke zur Schneidkantenmitte hin vorzugsweise zunimmt.

Ausführungsbeispiele der Erfindung sind in den Zeichnungen dargestellt. Es zeigen:
- Fig. 1a: eine Draufsicht auf einen rhombischen Schneideinsatz,
- Fig. 1b: jeweilige Schnitte entlang der Linien A - A bis I - I entsprechend Fig. 1a,
- Fig. 1c: eine vergrößerte Teilansicht einer Schneidkante,
- Fig. 1d: eine perspektivische Ansicht der Schneidkante nach Fig. 1a,
- Fig. 2a bis c: eine Draufsicht auf einen Schneideinsatz mit positivem Freiwinkel und jeweilige Schnittansichten entlang der Linien K - K sowie L - L,
- Fig. 3: Schnittansichten unterschiedlicher Ausführungsformen entlang der Linie III - III nach Fig. 2a in Arbeitslage,
- Fig. 4a bis h: jeweilige Teilschnittansichten unterschiedlicher Schneidkantenausführungen,
- Fig. 5, a bis d: Variationen des erfindungsgemäßen Schneideinsatzes in einer Draufsicht sowie Teilschnittansichten entlang der Linien A - A und B - B,
- Fig. 6a und b: unterschiedliche Ausführungsformen der Schneidkante mit konvexem bzw. konkavem Verlauf,
- Fig. 7a und b: die Darstellung eines Schneideinsatzes in Arbeitslage als Draufsicht,
- Fig. 8a bis i: jeweils Vorderansichten auf die Freifläche unterschiedlicher Ausführungsformen und
- Fig. 9a bis c: Draufsichten auf weitere Ausführungsformen der Erfindung.

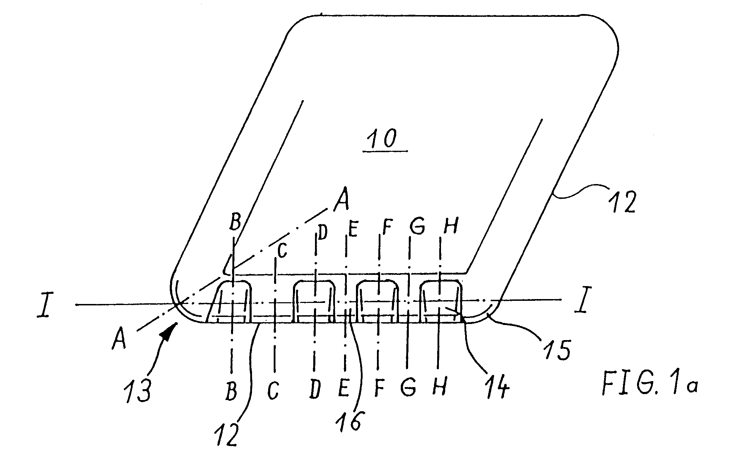

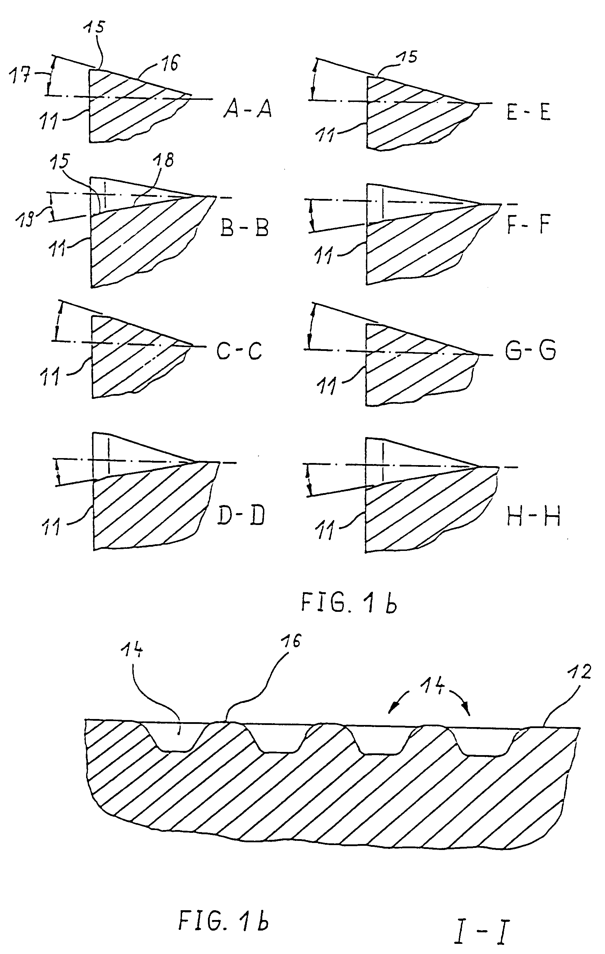

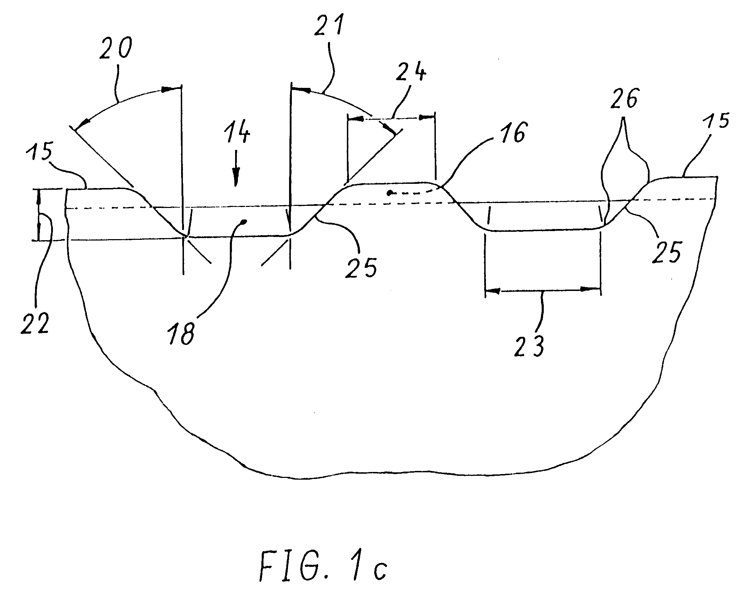

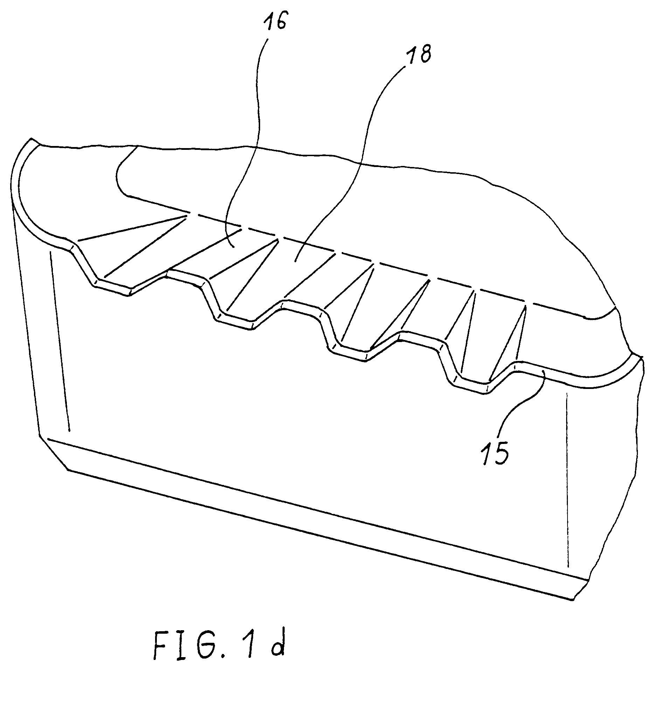

Wie in Fig. 1a dargestellt, besitzt der Schneideinsatz eine Spanfläche 10, die zusammen mit den hierzu senkrecht oder unter einem Freiwinkel angeordneten Freiflächen 11 jeweils eine Schneidkante 12 bildet. Im vorliegenden Fall ist die Platte rhombisch ausgebildet und besitzt somit vier Schneidecken 13. Prinzipiell gilt für die Ausbildung des Schneideinsatzes entsprechendes, wenn dieser andere Formen, wie z.B. die Dreiecksform aufweist. Entlang jeder Schneidkante und diese durchbrechend sind Eindrückungen 14 vorgesehen, die sich in fortlaufender Reihe entlang der Schneidkante 12 erstrecken. Diese Eindrückungen besitzen in einer Querschnittsansicht bzw. einer Seitenansicht auf die Freifläche gesehen eine Trapezform, wobei die schmalere der beiden parallelen Trapezseiten die Spanfläche der Eindrückung bildet, mithin die Trapezflanken zur Spanfläche 10 des Schneideinsatzes hin geöffnet verlaufen.

Der in Fig. 1a dargestellte Schneideinsatz besitzt zusätzlich noch eine umlaufende sich an die Schneidkante 12 anschließende Fase 15.

Wie sich aus Fig. 1b, Schnitt A - A, C - C, E - E und G - G ergibt, verläuft die Fase unter einem annähernd 90°-Winkel zur Freifläche 11. An die Fase 15 schließt sich ein abfallender Spanflächenteil 16 unter einem Winkel 17 von 5° bis 20° an. Wie aus Schnittansichten B - B, D - D, F - F und H - H ersichtlich, ist zwischen den vorbeschriebenen Spanflächenabschnitten jeweils eine Eindrückung 14 vorgesehen, innerhalb deren Verlauf sich ebenfalls die Fase 15 fortsetzt.

Die Eindrückung besitzt einen Spanflächengrund 18, der unter einem Winkel 19 von etwa 10 bis 15° gegenüber der Horizontalen geneigt ist, also negativ verläuft. Wie unter anderem aus Fig. 1d besonders ersichtlich, ist der Winkel der Fase 15 zu dem abfallenden Spanflächenbereich 16 einerseits und zu dem Spanflächengrund 18 andererseits jeweils gleich groß ausgebildet. Hierdurch ist die Fase im Bereich der Eindrückungen 14 zur Schneidkante hin noch negativer geneigt als der Spanflächengrund 18 der Eindrückung.

Wie aus Fig. 1a bis c ersichtlich, reihen sich an der Schneidkante 12 Eindrückungen 14 aneinander, deren Abstände gleich groß oder verschieden groß gewählt werden können. Wie aus Fig. 1b, Schnitt I - I besonders ersichtlich, wechseln sich die Eindrückungen 14 mit Spanflächenbereichen 16 in einer gleichmäßigen Berg-Talform ab. Die Übergänge der Eindrückungen 14 zu den Spanflächenbereichen 16 sind abgerundet ausgestaltet. Im Normalfall sind die Trapezformen der Eindrückungen 14 symmetrisch ausgebildet, d.h., die Trapezflankenwinkel 20 und 21 sind gleich groß - hier 45°. Bei vorgegebenem Neigungswinkel 19 des Spanflächengrundes 18 der Eindrückungen 14 ergibt sich eine Tiefe 22 gegenüber den Fasen 15 bzw. Spanflächen 16. Der Übergang der Trapezflanken 25 zu dem Spanflächengrund 18 besitzt ebenso Abrundungen 26 wie der Übergang von der Trapezflanke 25 zur Fase 15 bzw. der Spanfläche 16. Bei gleich gewähltem Abstand der Eindrückungen ist hierdurch die Breite 24 der unter einem positiven Spanwinkel verlaufenden Spanfläche 16 sowie die Breite 23 des unter einem negativen Spanwinkel 19 verlaufenden Spanflächengrundes 18 definiert. Wie noch im folgenden beschrieben werden wird, kann jedoch hinsichtlich der Breite 23 bzw. 25, der Höhe 22 und der Trapezflankenwinkel 20 variiert werden, um den Schneideinsatz jeweils anderen gewünschten Schnittbedingungen anzupassen. Wie aus Fig. 1a andeutungsweise ersichtlich, kann die der Schneidecke nächste Trapezflanke 25 unter einem größeren Trapezwinkel 20 (siehe Fig. 1c) ausgebildet sein, d.h. die Trapezflanke kann flacher zur Schneidecke hin auslaufen.

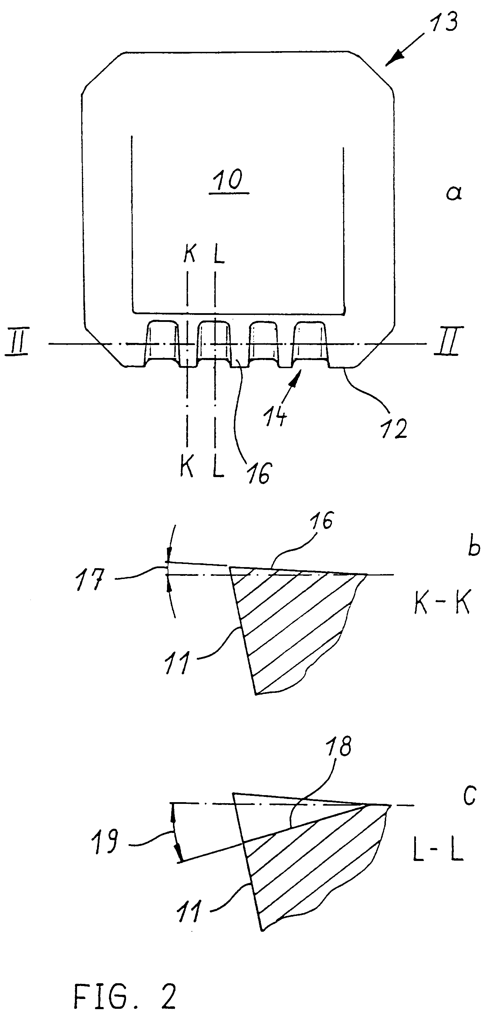

Die in Fig. 2a bis c dargestellte Schneidplatte ist im wesentlichen quadratisch ausgebildet und besitzt mit Abschrägungen versehene Schneidecken 13. Entlang der Schneidkante 12 erstrecken sich vier Ausnehmungen 14, deren Querschnitte ebenfalls positive Spanwinkel 17 bzw. negative Spanwinkel 19 offenbaren. Im Unterschied zu der in Fig. 1b dargestellten Ausführungsform wird hier die Schneidkante durch die Spanfläche 16 und die negativ gestellte Freifläche 11 bzw. den Spanflächengrund 18 und die Fläche 11 gebildet. Die Schneidkante 12 tritt hierdurch im Bereich der Eindrückungen 14 zwangsläufig "etwas zurück".

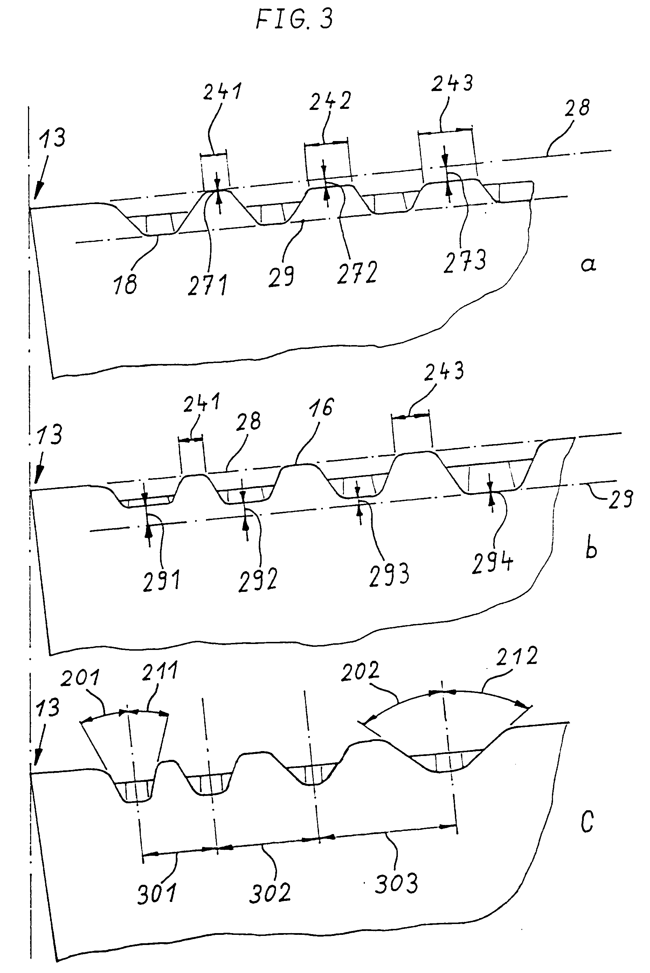

In Fig. 3a bis c sind jeweilige Variationen der Tiefen 22 und der Trapezflankenwinkel 20 und 21 angedeutet. Wie aus Fig. 3a ersichtlich, werden die Breiten der die Eindrückungen 14 umgebenden Spanflächenbereiche (hier 241 bis 243) mit wachsendem Abstand von der Schneidecke 13 größer. Die Breite 23 des Spanflächengrundes 18 bleibt hierbei konstant. Hierdurch wird der Abstand der Eindrückungen 14 voneinander in größerer Entfernung von der Schneidecke 13 größer.

Gleichzeitig wird gegenüber einer durch die Verbindung der Schneidecken 13 definierten Fläche 28 der Abstand der Spanflächenbereiche 16 variiert. Im vorliegenden Fall ergibt sich ein konkaver Schneidkantenverlauf von Schneidecke 13 zur nächsten Schneidecke 13, da die Abstände 271 (gleich 0) zu 273 hin größer werden. Hierbei bleibt die durch den Spanflächengrund 18 definierte Basis 29 der Eindrückungen 14 konstant.

Bei der Ausführungsform nach Fig. 3b verläuft die gemeinsame Hüllkurve der Spanflächenbereiche 16 im Bereich der oben definierten Ebene 28. Allerdings wächst die Tiefe der Eindrückungen 14 mit zunehmendem Abstand von der Schneidecke 13, was sich durch kleiner werdende Abstände 291 bis 294 gegenüber einer willkürlich angenommenen Ebene 29 ausdrückt. In gleichem Maße wachsen auch die Abstände 241 bis 243 wie zu Fig. 3a beschrieben.

Eine andere Variationsmöglichkeit bietet sich durch Änderung der Trapezwinkel 201 bzw. 211 zu 202 bzw. 212, die mit wachsendem Abstand von der Schneidecke 13 ebenso größer werden wie die zwangsläufig wachsenden Abstände 301 bis 303 der Eindrückungen 14, jeweils von ihrer Mitte aus gemessen, in entsprechender Weise wachsen. Selbstverständlich sind auch Kombinationen der in Fig. 3a bis c angegebenen Änderungsmöglichkeiten Teil der vorliegenden Erfindung.

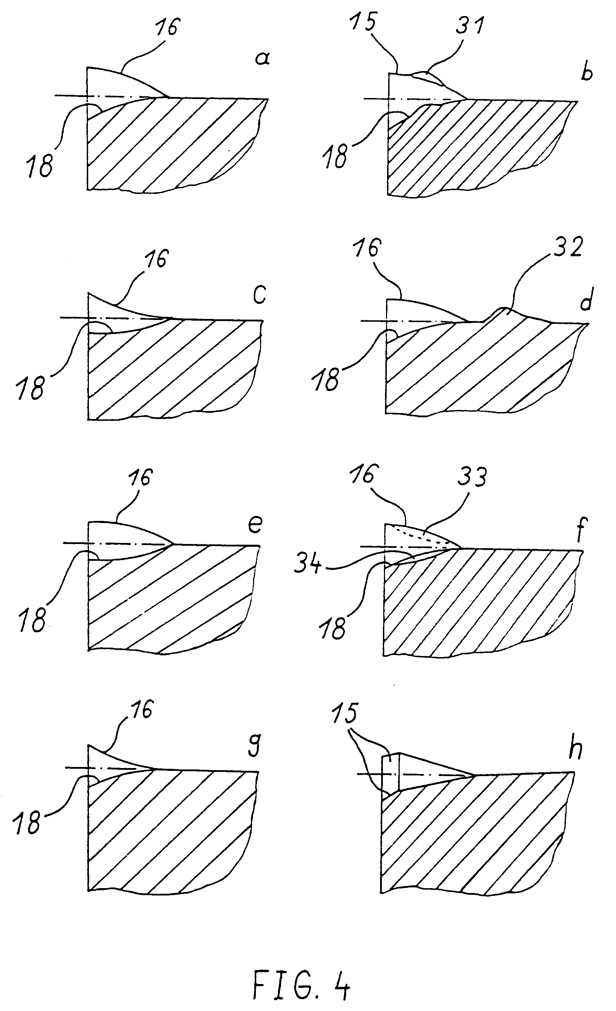

Weitere Ausführungsvarianten zeigen Fig. 4a bis h, worin jeweils Schnitte senkrecht zur Schneidkante 12 im Bereich einer Eindrückung 14 dargestellt sind. Bei der in Fig. 4a dargestellten Ausführungsform verlaufen die Spanfläche 16 sowie der Spanflächengrund 18 zur Schneidkante hin jeweils konvex. Der Spanwinkel, unter dem die Spanfläche 16 an der Schneidkante ausläuft, ist mindestens 0° oder positiv, wohingegen der Spanflächenwinkel des Spanflächengrundes 18 negativ ist.

Nach Fig. 4b besitzt der Schneideinsatz im Anschluß an eine horizontal verlaufende Fase 15 noch ein erhabenes Spanformelement 31, das teilkugelig, pyramidenstumpfförmig oder langgestreckt ausgebildet sein kann. Der Spanflächengrund 18 verläuft konvex, allerdings unter einem negativen Spanwinkel. Zusätzlich kann entweder über die gesamte Breite der Eindrückung 14 oder inmitten der Eindrückung 14 ein erhabenes weiteres Spanformelement angeordnet sein, woraus sich ein wellenförmiger Verlauf entsprechend Fig. 4b ergibt.

Ebenso konkav sind die Spanflächenbereiche 16 und der Grund 18 nach Fig. 4c ausgestaltet, allerdings enden beide Flächen unter einem positiven Spanwinkel im Schneidkantenbereich.

Die Ausführungsform nach Fig. 4d entspricht der in Fig. 4a beschriebenen Ausführungsform mit der Maßgabe, daß im Anschluß an den konvexen Verlauf der Spanfläche 16 und damit hinter den Eindrückungen Spanformelemente 32 entlang der Schneidkante angeordnet sind, für die Entsprechendes wie zu den oben beschriebenen Spanformelementen 31 gilt.

Fig. 4e zeigt die Ausführungsvariante einer konvex ausgebildeten Spanfläche 16 bei einem konkav ausgebildeten Spanflächengrund 18.

Nach Fig. 4f sind die Spanfläche 16 und der Spanflächengrund 18 jeweils konvex ausgebildet, beide Bereiche 16 und 18 besitzen jedoch eine Mulde 33 bzw. 34, die sich in Richtung der Spanflächenmitte erstreckt.

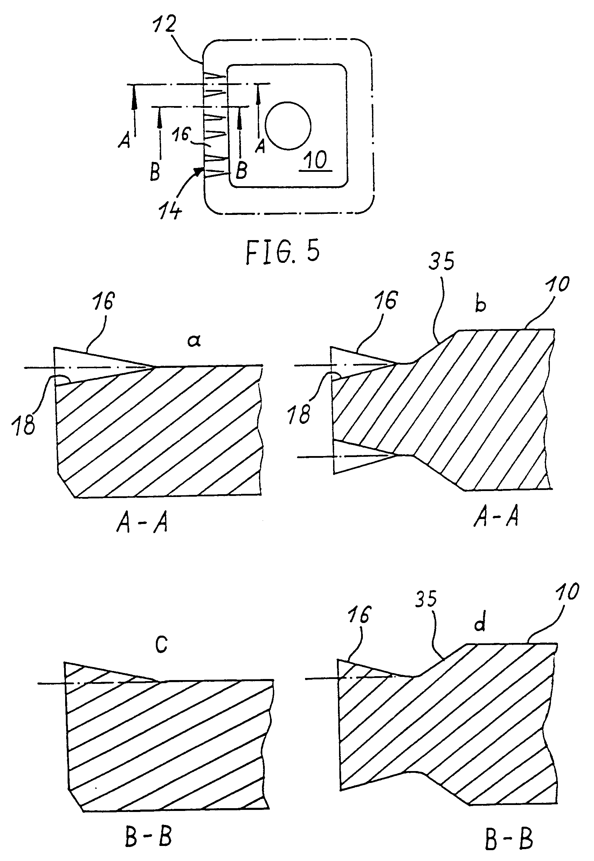

Fig. 4g zeigt einen Schneideinsatz mit einer konkav abfallenden Spanfläche 16 und einem konvexen Spanflächengrund 18. Bei der in Fig. 4h dargestellten Ausführungsform schließt sich an die Schneidkante jeweils eine Fase 15 an, die dem Verlauf der Spanfläche 16 und dem der Eindrückungen folgt. Die Fase steht im vorliegenden Fall unter einem negativen Spanwinkel. Auch hinsichtlich der in den Fig. 4a bis h dargestellten Ausführungsbeispiele sind Varianten der einzelnen Merkmale untereinander möglich. In Fig. 5 ist eine quadratische Schneidplatte dargestellt, die eine mittlere Spanfläche 10 aufweist, die entweder gegenüber der höchsten Schneidkantenerhebung abgesenkt (Fig. 5a und c) oder erhöht (Fig. 5b und d) sein kann. In jedem Falle verläuft jedoch der Spanflächenbereich 16 unter einem positiven Spanflächenwinkel zur Schneidkante 12 hin aus. Der Spanflächengrund 18 besitzt jeweils einen negativen Spanwinkel. Durch die erhabene Form der Spanfläche 10 gemäß Fig. 5b und 5d ergibt sich ein zusätzlicher Übergangsbereich 35 zwischen dem Spanflächenbereich 16 und dem Bereich 10. Die in Fig. 5b und 5d dargestellten Ausführungsformen unterscheiden sich von denen nach Fig. 5a und c lediglich dadurch, daß die erstgenannten Platten als Wendeschneidplatten, d.h. beidseitig verwendbar, ausgebildet sind.

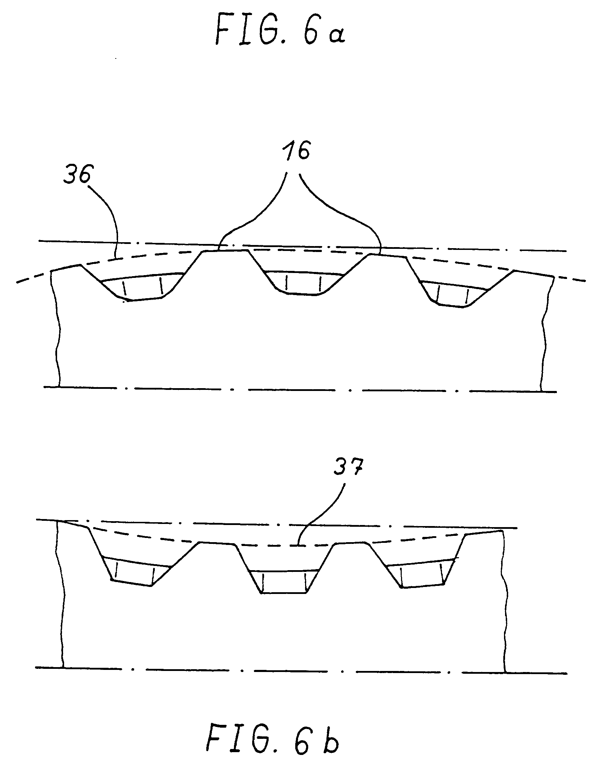

Wie in Fig. 6a und 6b dargestellt, können die Hüllkurven der Spanflächen Bereiche 16 einerseits bzw. deren Verlauf folgend der Spanflächengrund 18 andererseits auch konvex (Fig. 6a) bzw. konkav (Fig. 6b) verlaufen. Der Verlauf der Hüllkurve 36 bestimmt dann gleichermaßen den Krümmungsverlauf der Verbindungslinie der einzelnen Eindrückungen 14. Entsprechendes gilt für die Hüllkurve 37 nach Fig. 6b. Je nach Krümmung ergibt sich im Schneideckenbereich ein negativer oder positiver Neigungswinkel.

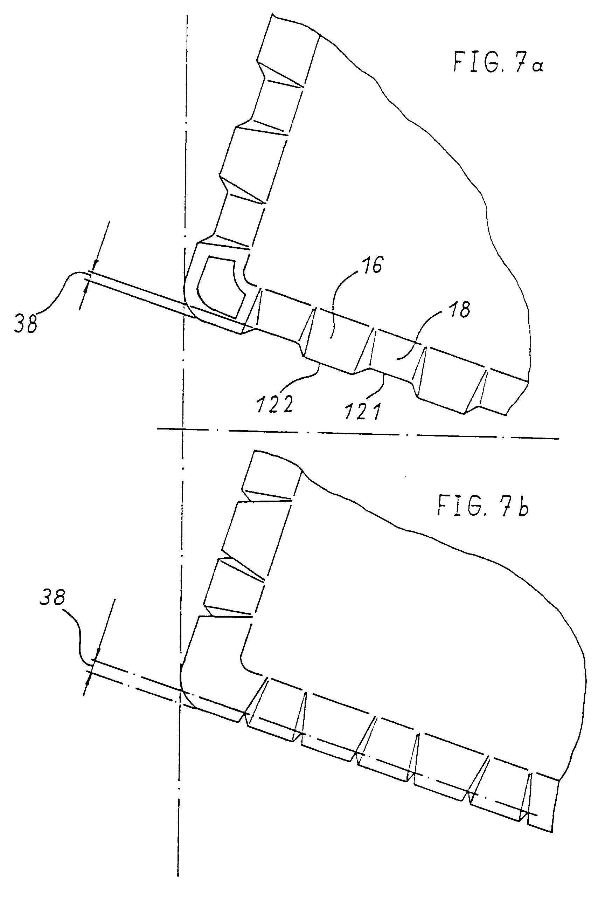

Fig. 7a und 7b zeigen jeweils Ausführungsformen quadratischer Wendeschneidplatten in Arbeitslage, die sich dadurch unterscheiden, daß im Fall der Ausführungsform nach Fig. 7a die Schneidkante 121 im Bereich des Spanflächengrundes 18 gegenüber der Schneidkante 122 im Bereich der Spanfläche 16 um eine Strecke 38 zurücktritt, die von dem Neigungswinkel der Flächen 16 und 18 gegeneinander abhängt. Bei der in Fig. 7b dargestellten Ausführungsform ist hingegen dieser Abstand 38 dadurch kompensiert worden, daß der Spanflächengrund 18, d.h. die Schneidkante 121, bis in die Ebene der Schneidkante 122 vorgezogen worden ist.

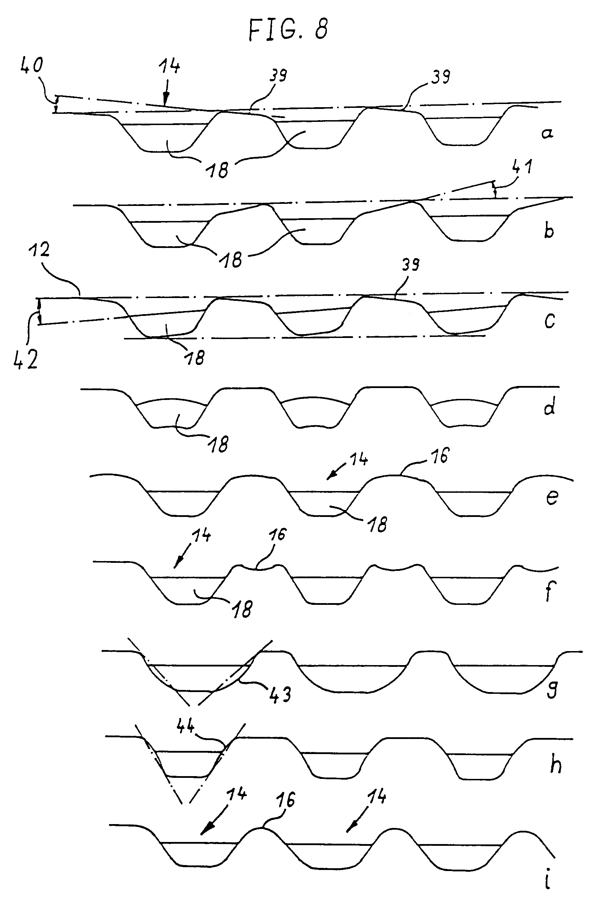

Fig. 8a bis i zeigen weitere mögliche Varianten. So kann beispielsweise zwischen den Eindrückungen 14 der Spanflächenbereich 39 in Schneidkantenrichtung gesehen abfallend, d.h., unter einem Winkel 40 oder auch ansteigend (Winkel 41) verlaufen. Zusätzlich kann, wie in Fig. 8c dargestellt, auch der Spanflächengrund 18 der Eindrückungen unter einem Winkel 42 gegenüber der Schneidkante 12 geneigt sein, und zwar zusammen mit abfallenden Spanflächen 39 oder entsprechend ansteigenden Spanflächen, wie in Fig. 8b dargestellt.

Bei der Ausführungsform nach Fig. 8d ist der Spanflächengrund 18 konvex gewölbt. Ebenso ist es gemäß Fig. 8e möglich, die zwischen den Eindrückungen 14 liegenden Spanflächenbereiche 16 nicht linear, sondern konvex oder konkav (siehe Fig. 8f) zu gestalten.

Weitere Variationen entsprechend den Fig. 8g und h sind dergestalt möglich, daß gegenüber angenommenen flächigen Trapezflanken der betreffende Trapezflankenverlauf 43 konkav oder, mit Bezugszeichen 44 kenntlich gemacht, konvex verläuft. Schließlich ist es entsprechend der Darstellung nach Fig. 8i auch möglich, den Spanflächenbereich 16 zwischen zwei Eindrückungen 14 rund, d.h., ohne ebenflächigen Anteil zu gestalten.

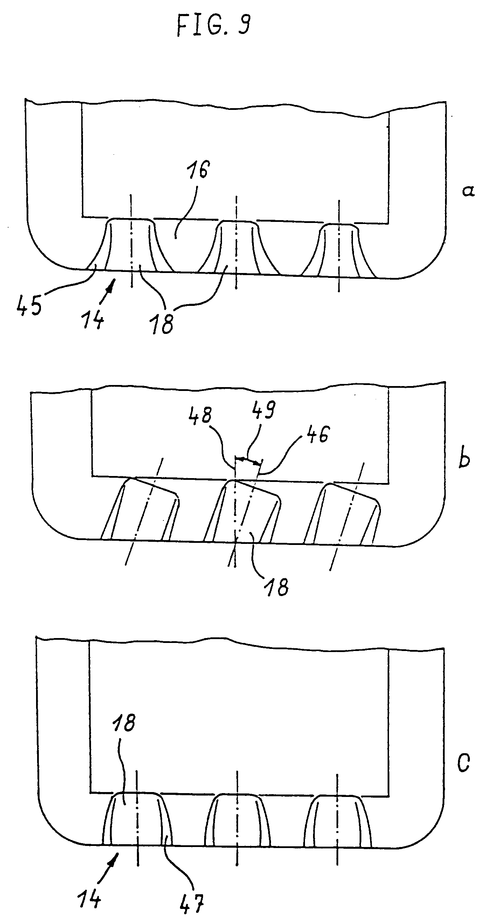

Außerdem ist es möglich, die Trapezflankenflächen 45 jeweils konvex an der Grenze zu den Spanflächen 16 bzw. dem Spanflächengrund 18 auslaufen zu lassen. Wie aus Fig. 9c ersichtlich, können betreffende Trapezflankenflächen 47 jedoch auch konkav auslaufen. Eine weitere Variation, die auch bezüglich der in den Fig. 1a, 2a, 5 oder 7a, b und Fig. 9a, c verwendet werden kann, besteht darin, daß die Längsachsen 46 gegenüber einer Schneidkantenormalen 48 unter einem Winkel 49 geneigt angeordnet werden. In entsprechender Weise ist dann der rückwärtige Auslauf des Spanflächengrundes 18 schräggestellt.

## Patentansprüche

1. Schneideinsatz für die spanabhebende Bearbeitung, insbesondere zur Grobbearbeitung metallischer Werkstücke bei hohen Vorschüben, mit einer Spanfläche (10, 16), die mindestens im Bereich einer Schneidkante (12) mit Eindrückungen (14) versehen ist, die in fortlaufender Reihe entlang der Schneidkante (12) und diese durchbrechend angeordnet sind und die in einem parallel zur Schneidkante (12) und senkrecht zur Spanfläche (10) liegenden Querschnitt im wesentlichen eine Trapezform mit zur Spanfläche (10, 16) hin geöffneten Trapezflanken aufweisen,
**dadurch gekennzeichnet**,
daß die Eindrückungen einen unter einem negativen Spanwinkel (19) oder einem 0°-Spanwinkel zur Schneidkante (12) hin auslaufenden Spanflächengrund aufweisen, wobei die Spanfläche (16) im Bereich zwischen den Eindrückungen (14) an der Schneidkante (12) einen positiven Spanwinkel (17) von mindestens 5° besitzt und die Übergänge (26) von dem negativen Spanflächengrund (18) zu den Trapezflanken (25) und von den Trapezflanken (25) zu den die Eindrückungen (14) umgebenden Spanflächenbereichen (16) abgerundet sind.

2. Schneideinsatz nach Anspruch 1, dadurch gekennzeichnet, daß der Trapezflankenwinkel (20, 21; 201, 211, 202, 212) zwischen 30° und 80° liegt.

3. Schneideinsatz nach einem der Ansprüche 1 oder 2, dadurch gekennzeichnet, daß der negative Spanwinkel (19) des trapezförmigen Grundes (18) der Eindrückung (14) zwischen 0° und 20°, vorzugsweise zwischen 5° und 15°, liegt.

4. Schneideinsatz nach einem der Ansprüche 1 bis 3, dadurch gekennzeichnet, daß der positive Spanwinkel (17) der die Eindrückungen (14) umgebenden Spanfläche (16) zwischen 5° und 25°, vorzugsweise 5° und 20°, liegt.

5. Schneideinsatz nach einem der Ansprüche 1 bis 4, dadurch gekennzeichnet, daß an der Schneidkante (12) die Abstände (24; 241 bis 243) der Eindrückungen (14) voneinander kleiner sind als die Breite (23) der Eindrückungen (14) oder mit wachsendem Abstand von der Schneidecke (13) gleichmäßig zunehmen.

6. Schneideinsatz nach einem der Ansprüche 1 bis 5, dadurch gekennzeichnet, daß die Eindrückungen (14) in einer Draufsicht auf die Spanfläche (10, 16) gesehen im wesentlichen rechteckig, vorzugsweise trapezförmig sind.

7. Schneideinsatz nach einem der Ansprüche 1 bis 6, dadurch gekennzeichnet, daß an die Schneidkante (12) eine Fase (15) angrenzt.

8. Schneideinsatz nach Anspruch 7, dadurch gekennzeichnet, daß der Winkel zwischen der in der Spanflächenebene (10, 16) liegenden Fase (15) und dem positiven Spanflächenbereich (16) zwischen den Eindrückungen (14) derselbe wie zwischen der betreffenden Fase (15) und dem negativen Spanflächengrund (18) der Eindrückung (14) ist, vorzugsweise zwischen 160° und 175° liegt.

9. Schneideinsatz nach einem der Ansprüche 1 bis 8, dadurch gekennzeichnet, daß der Spanflächengrund (18) der Eindrückung (14) oder die diese umgebende Spanfläche (16) eine zusätzliche Spanmulde (33, 34) aufweist.

10. Schneideinsatz nach einem der Ansprüche 1 bis 9, dadurch gekennzeichnet, daß die die Eindrückung(en) (14) umgebende Spanfläche (16) im Abstand von der Schneidkante (12) angeordnete erhabene Spanformelemente (31, 32) aufweist, vorzugsweise in teilkegeliger oder pyradmidenstumpfartiger Form.

## Claims

1. A cutting insert for chip-forming machining, in particular for roughing of metallic workpieces with a high feed rate, having a chip surface (10, 16) which is provided in the region of a cutting edge (12) with indentations (14) which are arranged in a row extending along the cutting edge (12), which interrupt same and which have a generally trapezoidal sectional shape parallel to the cutting edge (12) and perpendicular to the chip surface (10) with trapezoidal sides open toward the chip surface
characterized in that
the indentations have a chip-surface base extending at a negative or 0° rake angle (19) to the cutting edge (12), the chip surface (16) in the region between the indentations (14) at the cutting edge (12) has a positive rake angle (17) of at least 5°, and the transitions (26) from the negative chip-surface base (18) to the trapezoidal sides (25) and from the trapezoid sides (25) to the chip-surface regions (16) surrounding the indentations (14) are rounded.

2. The cutting insert according to claim 1, characterized in that the trapezoid side angles (20, 21; 201, 211, 202, 212) are between 30° and 80°.

3. The cutting insert according to one of claims 1 or 2, characterized in that the negative chip angle (19) of the trapezoidal base (18) of the indentation (14) lies between 0° and 20°, preferably between 5° and 15°.

4. The cutting insert according to one of claims 1 to 3, characterized in that the positive rake angle (17) of the chip surface (16) surrounding the indentations (14) is between 5° and 25°, preferably 5° and 20°.

5. The cutting insert according to one of claims 1 to 4, characterized in that the spacings (24; 241 to 243) of the indentations (14) at the cutting edge (12) are smaller than the width (23) of the indentations (14) or increase uniformly with increasing spacing from the cutting edge (13).

6. The cutting insert according to one of claims 1 to 5, characterized in that the indentation (14) seen in a top view on the chip surface (10, 16) are generally rectangular, preferably trapezoidal.

7. The cutting insert according to one of claim 1 to 6, characterized in that a chamfer (15) adjoins to the cutting edge (12).

8. The cutting insert according to claim 7, characterized in that the angle between the chamfer (15) lying in the chip-surface plane (10, 16) and the positive chip-surface region (16) between the indentations (14) is the same as the angle between this chamfer (15) and the negative chip-surface base (18) of the indentation (14), the angle preferably is between 160 and 175°.

9. The cutting insert according to one of claims 1 to 8, characterized in that the chip-surface base (18) of the indentation (14) or the surrounding chip surface (16) has an additional chip groove (33, 34).

10. The cutting insert according to one of claims 1 to 9, characterized in that the chip surface (16) surrounding the indentation(s) (14) has at a spacing from the cutting edge (12) raised chip-forming elements (31, 32), preferably shaped as pyramidal or conical frustums.

## Revendications

1. Insert de coupe destiné à l'usinage par enlèvement de copeaux, et en particulier au dégrossissage de pièces métalliques avec des avances importantes, comportant une face de coupe (10, 16) qui est, du moins dans la zone d'un tranchant (12), munie d'encoches (14) qui sont disposées à la ligne le long du tranchant (12) tout en interrompant celui-ci et qui présentent, en une coupe transversale parallèle au tranchant (12) et perpendiculaire à la face de coupe (10), pour l'essentiel une forme trapézoïdale avec des flancs trapézoïdaux ouverts vers la face de coupe (10, 16),
**caractérisé par le fait**,
que les encoches présentent un fond de face de coupe se terminant vers le tranchant (12) sous un angle de coupe négatif (19) ou sous un angle de coupe de 0°, la face de coupe (16) présentant dans la zone située entre les encoches (14), sur le tranchant (12) un angle de coupe positif (17) de 5° au moins, et les transitions (26) du fond négatif de face de coupe (18) vers les flancs trapézoïdaux (25) ainsi que des flancs trapézoïdaux (25) vers les zones de face de coupe (16) entourant les encoches (14) étant arrondies.

2. Insert de coupe selon la revendication 1, caractérisé par le fait que l'angle de flanc trapézoïdal (20, 21; 201, 211, 202, 212) est compris entre 30° et 80°.

3. Insert de coupe selon l'une des revendications 1 ou 2, caractérisé par le fait que l'angle de coupe négatif (19) du fond trapézoïdal (18) de l'encoche (14) est compris entre 0° et 20°, et de préférence entre 5° et 15°.

4. Insert de coupe selon l'une des revendications 1 à 3, caractérisé par le fait que l'angle de coupe positif (17) de la face de coupe (16) entourant les encoches (14) est compris entre 5° et 25°, et de préférence entre 5° et 20°.

5. Insert de coupe selon l'une des revendications 1 à 4, caractérisé par le fait que les écarts (24; 241 à 243) séparant les encoches (14) l'une de l'autre sur le tranchant (12) sont plus petits que la largeur (23) des encoches (14) ou deviennent régulièrement plus grands au fur et à mesure que l'on s'éloigne du coin de coupe (13).

6. Insert de coupe selon l'une des revendications 1 à 5, caractérisé par le fait que les encoches (14), vues dans une vue de dessus sur la face de coupe (10, 16), présentent une forme pour l'essentiel rectangulaire, et de préférence trapézoïdale.

7. Insert de coupe selon l'une des revendications 1 à 6, caractérisé par le fait qu'un chanfrein (15) est contigu au tranchant (12).

8. Insert de coupe selon la revendication 7, caractérisé par le fait que l'angle formé entre le chanfrein (15) se trouvant dans le plan (10, 16) de la face de coupe et la zone positive de face de coupe (16) située entre les encoches (14) est le même que celui qui est formé entre le chanfrein (15) correspondant et le fond négatif (18) de la face de coupe de l'encoche (14), et que celui-ci est compris de préférence entre 160° et 175°.

9. Insert de coupe selon l'une des revendications 1 à 8, caractérisé par le fait que le fond (18) de la face de coupe de l'encoche (14) ou la face de coupe (16) entourant cette encoche présente un creux de coupe (33, 34) additionnnel.

10. Insert de coupe selon l'une des revendications 1 à 9, caractérisé par le fait que la face de coupe (16) entourant l(es) encoche(s) (14) présente des éléments élevés à former le copeau (31, 32) qui sont disposés à une certaine distance par rapport au tranchant (12) et qui présentent de préférence la forme de troncs de cône ou de troncs de pyramide.
